## Europäisches Patentamt

## European Patent Office

## Office européen des brevets

(19)

(11) Veröffentlichungsnummer: **0 046 272**
**B1**

(12) **EUROPÄISCHE PATENTSCHRIFT**

(45) Veröffentlichungstag der Patentschrift:
**12.08.87**

(51) Int. Cl.⁴: **B 23 Q 1/02,** F 16 M 1/00,
B 24 B 41/02, C 04 B 26/06

(21) Anmeldenummer: **81106294.2**

(22) Anmeldetag: **13.08.81**

(54) **Verfahren zur Herstellung von Maschinenbauteilen, z.B. Maschinenständern.**

(30) Priorität: **16.08.80 DE 3030914**
**04.05.81 DE 8113100 U**

(43) Veröffentlichungstag der Anmeldung:
**24.02.82 Patentblatt 82/8**

(45) Bekanntmachung des Hinweises auf die Patenterteilung:
**12.08.87 Patentblatt 87/33**

(84) Benannte Vertragsstaaten:
**AT BE CH DE FR GB IT LI NL SE**

(56) Entgegenhaltungen:
**BE-A-623 314**
**CH-A-612 610**
**DE-A-2 160 612**
**DE-A-2 222 573**
**DE-A-2 508 811**
**DE-B-1 253 629**
**FR-A-2 188 596**
**FR-A-2 280 608**
**GB-A-1 163 356**
**US-A-3 827 933**

(73) Patentinhaber: **Koblischek, Peter, Parkstrasse 15,
D-6000 Frankfurt/Main 1 (DE)**

(72) Erfinder: **Koblischek, Peter, Parkstrasse 15, D-6000
Frankfurt/Main 1 (DE)**
Erfinder: **Nicklau, Rudolf- Georg, Dipl.- Ing., Im
Strehling 11, D-6104 Seeheim- Jugenheim 2 (DE)**

(74) Vertreter: **Lippert, Hans, Dipl.- Ing., Reichel und
Reichel Parkstrasse 13, D-6000 Frankfurt (Main) 1
(DE)**

LIBER, STOCKHOLM 1987

## Beschreibung

Die Erfindung betrifft ein Verfahren zur Herstellung von tragenden Maschinenbauteilen, z.B. Maschinenständern gemäß dem Gattungsbegriff des Anspruch 1.

Ein solches Verfahren ist durch die DE-OS 27 43 396 (CH-A- 612 610) bekannt.

Beim 4. Internationalen Reaktions-Harz-Beton-Seminar am 18-20. April 1977 an der Fachhochschule Rosenheim wurde von Herrn Peter Koblischek ein Vortrag gehalten, in dem die Verwendung von Acrylbeton für verschiedene Bauteile im Bauwesen und für spezielle industrielle Produkte dargelegt wurde. Bei diesem Acrylbeton wird als Kunststoffbindemittel flüssiges, kalthärtendes Methylmethacrylatharz mit einer dynamischen Viskosität von unter 10 mPas verwendet, in dem ein aromatisches tertiares Amin gelöst ist und es wird den trockenen Zuschlagstoffen polymeres Methacrylatpulver und ein organisches Peroxid beigegeben.

Aufgabe der Erfindung ist die Vereinfachung der Herstellung von Komplizierten oder großen Maschinenbauteilen, z.B. Maschinenständern, die wirtschaftlich nicht aus einem Stück hergestellt werden können.

Diese Aufgabe wird durch das Verfahren nach Anspruch 1 gelöst.

Weitere Ausgestaltungen der Erfindung sind in den Unteransprüchen gekennzeichnet und werden nachstehend in Verbindung mit den Ausführungsbeispiele darstellenden, schematisch etwas vereinfacht gezeichneten Figuren näher beschrieben.

Es zeigt:

Fig. 1 einen Maschinenständer für eine Hochleistungsfräsmaschine in isometrischer Darstellung.

Fig. 2 einen Vertikalschnitt durch einen Maschinenständer einer Schleifmaschine;

Fig. 3 einen erfindungsgemäß ausgebildeten Maschinenständer, bestehend aus Ständerunterteil, Säule und Ständeroberteil;

Fig. 4 eine Variante der in Fig. 3 dargestellten Ausführungsform;

Fig. 5 eine weitere Variante der in Fig. 3 dargestellten Ausführungsform;

Fig. 6 eine erfindungsgemäße Ausführungsform, bei der Ständeroberteil und Ständerunterteil mit zwei Säulen verbunden sind;

Fig. 7 eine Variante der in Fig. 6 dargestellten Ausführungsform mit vier Säulen zwischen Ständeroberteil und Ständerunterteil.

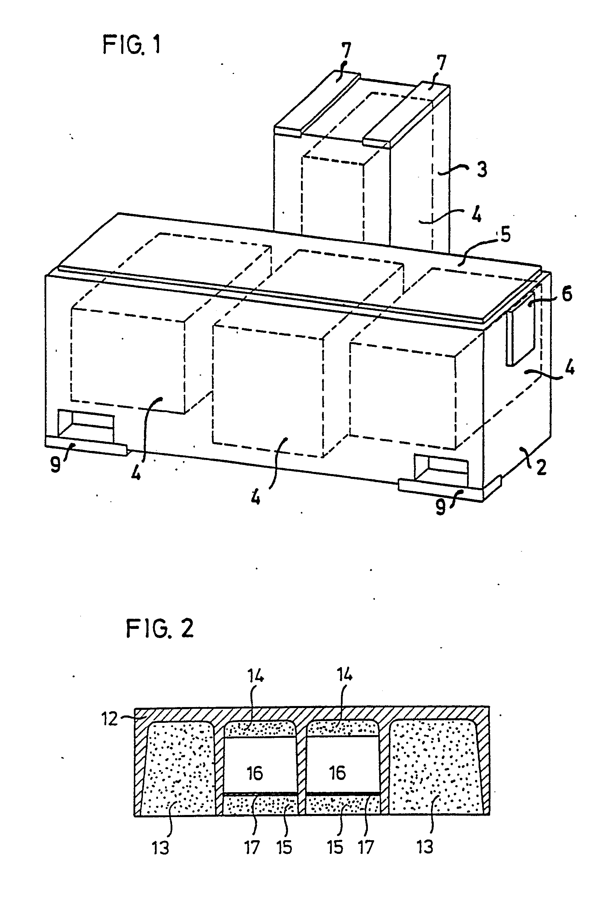

Figur 1 zeigt einen Maschinenständer für eine Fräsmaschine hoher Fräsleistung. Der in der Figur dargestellte Maschinenständer besteht aus einem im wesentlichen quaderförmigen Längsteil 2 und einem damit im Material verbundenen, im wesentlichen quaderförmigen Turmteil 3, beide im wesentlichen aus Acrylbeton bestehend. Der Längsteil 2 enthält, ebenso wie der Turmteil 3, quaderförmige Einlagen 4 aus Polyurethanschaum, welche beim Herstellungsverfahren als verlorener Kern mit eingegossen werden, um Material zu sparen und das Gewicht des fertigen Produktes wesentlich zu verringern. In den quaderförmigen Längsteil 2 und den Turmteil 3 sind plattenförmige Stahleinlagen 5, 6 und 7 eingegossen.

Diese auf der Außenseite plattenförmig ausgebildeten Einlagen dienen zur Befestigung von weiteren Bauteilen. Auf die Stahleinlagen 5 wird die Vorschubeinheit der Fräsmaschine aufgesetzt und durch Schraubverbindung starr daran befestigt; an die Stahleinlagen 6 wird der Hauptantrieb für die Vorschubeinrichtung angeflanscht und an den beiden parallelen Platten 7 ist die Frässpindel-Einheit angebaut. Der Maschinenständer hat ferner eingegossene Füße 9; über diesen Füßen sind Aussparungen 10 vorgesehen, die einerseits den Transport erleichtern können und außerdem zur Aufnahme von Stellschrauben vorgesehen sind, durch welche die Maschinen am Aufstellungsort horizontal eingerichtet werden kann.

Zur Herstellung des in der Figur 1 in zum Teil schematisch vereinfachter Weise dargestellten Maschinenständers werden entweder der quaderförmige Längsteil 2 und der Turmteil 3 in einer gemeinsamen Form gegossen oder aber es wird zuerst der quaderförmige Längsteil 2 in einer Form gegossen und dann nach dessen Aushärtung wird mittels einer zusätzlichen Form der quaderförmige Turmteil 3 angegossen und dadurch starr im Material verbunden.

Die plattenförmigen Stahleinlagen 5, 6 und 7 werden an den entsprechenden Stellen in die Form eingelegt; gegebenenfalls kann es zweckmäßig sein, die Stahleinlage 6 und auch die Füße an den Wänden der Form von außen auch durch Schrauben zu fixieren. In die entsprechend vorbereitete Form wird das Gemisch aus Zuschlagstoffen und Methacrylatharz eingegossen. Hierbei sind zweckmäßigerweise die Zuschlagstoffe, das organische Peroxid und das polymere Methacrylatharzpulver trocken vorgemischt und diese trockene Mischung wird mit dem eine niedrige Viskosität aufweisenden Methacrylatharz versetzt und vermischt. Zuerst wird in die Form nur ein Teil der Mischung eingegossen, darauf werden die quaderförmigen Einlagen 4 aus Polyurethanschaum aufgesetzt und dann wird die Form weiterhin bis zur vorgesehenen Höhe angefüllt. Gegebenenfalls wird der Maschinenständer mit einem Überzug aus Gelcoat versehen. Der in die Form eingebrachte Acrylbeton wird während des Einbringens durch Vibration und eventuell zusätzliches Evakuieren verdichtet.

Der in Figur 2 im Vertikalschnitt dargestellte Maschinenständer einer Schleifmaschine hat einen diesen in Richtung nach oben und nach den beiden Seiten begrenzenden Formteil 12 aus Stahlguß. Die zwischen einzelnen Rippen dieses Formteiles befindlichen Hohlräume sind mit einer Schicht 13 aus Acrylbeton ausgegossen; die Räume zwischen mittleren Rippen sind im oberen Bereich durch Schichten 14 und im unteren Bereich durch Schichten 15 aus Acrylbeton ausgefüllt. Die Hohlräume 16 sind entweder durch Blechteile 17 derart abgeschlossen, daß bei der Herstellung der Schichten 15 kein Acrylbeton eindringen kann, oder sind durch eingesetzte Blöcke aus Schaumstoff, beispielsweise Polyurethan, gefüllt. Statt eines Formteiles aus Stahlguß können auch geschweißte Stahlkonstruktionen verwendet werden, was in manchen Fällen vorteilhaft ist.

Der in Figur 2 im Vertikalschnitt dargestellte Maschinenständer zeichnet sich gegenüber den in konventioneller Weise nur aus Stahlkonstruktion bestehenden Maschinenständern vor allem durch die im wesentlichen höhere Dämpfung und auch durch erhöhte Steifigkeit aus.

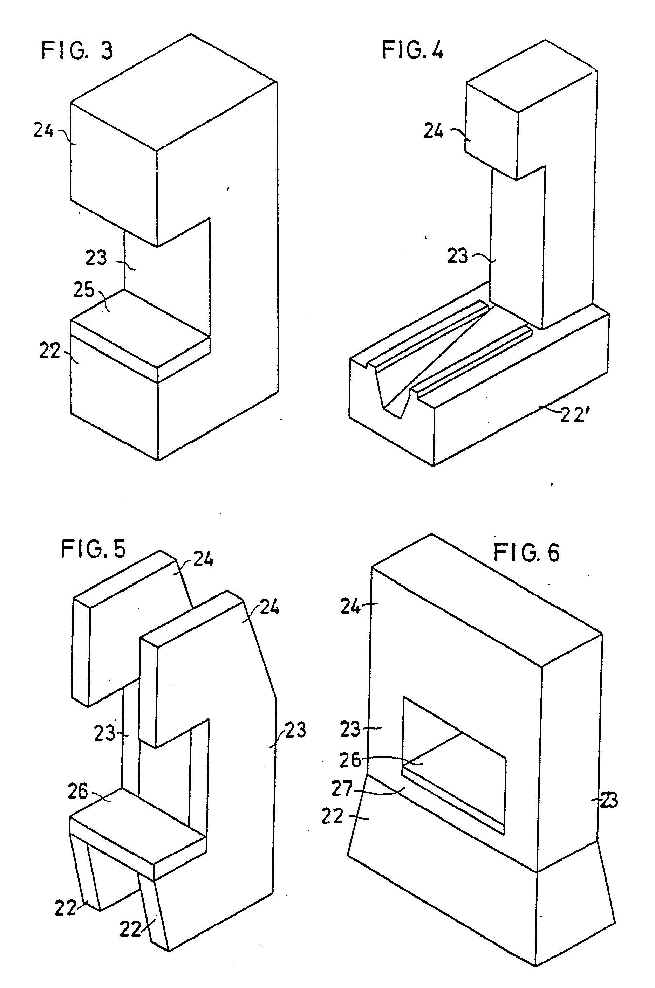

In Figur 3 ist ein erfindungsgemäß aus Acrylbeton ausgeführter Maschinenständer dargestellt, bei dem Ständeroberteil 24 über die Säule 23 seitlich vorkragt, so daß Ständerunterteil 22, Säule 23 und Ständeroberteil 24 ein aufrecht stehendes C bilden. Hierbei befindet sich auf dem Ständerunterteil 22 eine (stark vereinfacht dargestellte) Arbeitsplatte 25 aus Stahl, auf der dann noch die zum Betrieb der Maschine erforderlichen, nicht dargestellten Teile befestigt werden.

Fig. 4 zeigt eine der Fig. 3 ähnliche Ausführungsform, bei der jedoch der Ständerunterteil 22' aus einer mit Methacrylatharz ausgefüllten Eisenkonstruktion besteht.

Bei der in Fig. 5 dargestellten Ausführungsform sind zwei C-förmige, aus Ständerunterteil 22, Säule 23 und Ständeroberteil 24 bestehende, einzelne Ständer durch eine Arbeitsplatte 26 zu einem Doppelständer vereinigt. Die Arbeitsplatte 26 kann aus Acrylbeton bestehen oder aber auch aus einer - gegebenenfalls mit Acrylbeton ausgefüllten - Stahlkonstruktion.

Fig. 6 zeigt einen Maschinenständer in symmetrischer Ausführungsform, als sogenannte Portalform. Bei dieser sind Ständerunterteil 22 und Ständeroberteil 24 durch zwei Säulen 23 miteinander verbunden. Bei dieser Ausführungsform sind Ständeroberteil 24, Säulen 23 und ein diese unten verbindender Streifen 27 einstückig, und zwar im Material verbunden hergestellt. Auch bei dieser Ausführungsform ist eine Arbeitsplatte 26 vorgesehen. Die in Fig. 6 dargestellte Ausführungsform entspricht hinsichtlich ihrer Gestalt einer Kombination aus zwei spiegelbildlich zueinander angeordneten, C-förmigen Maschinenständern.

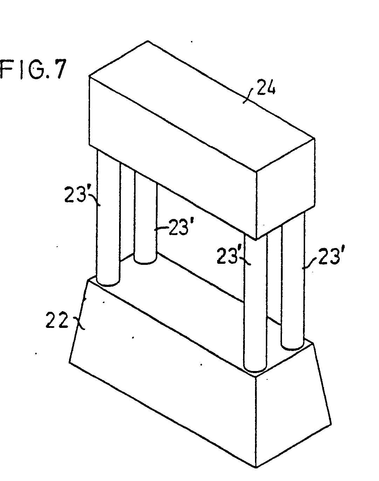

Bei der in Fig. 7 dargestellten Portalform eines erfindungsgemäßen Maschinenständers sind Ständerunterteil 22 und Ständeroberteil 24 durch vier Säulen 23' aus Acrylbeton verbunden.

Das erfindungsgemäße Verfahren zur Herstellung von Maschinenständern aus Acrylbeton zeichnet sich durch nachstehende Vorzüge aus:

1. Die Geschwindigkeit des Aushärtungsprozesses kann durch entsprechende Dosierung des Startersystems innerhalb verhältnismäßig breiter Grenzen verändert werden; so hat sich gezeigt, daß auch schon nach einer Stunde der Aushärteprozeß soweit beendet sein kann, daß der Maschinenständer aus der Form genommen werden kann. Infolgedessen kann auch mit nur einer Form bereits eine Serienproduktion durchgeführt werden. Dies ist im Hinblick auf die außerordentlich hohen Formkosten bei kompliziert gestalteten Maschinenständern von großer wirtschaftlicher Bedeutung.

2. Maschinenständer aus Acrylbeton bieten besonders günstige Möglichkeit, gewisse Bauteile als Grundtypen herzustellen und auf Lager zu fertigen. Es kann dann später durch zusätzliche Herstellung und Anbindung weiterer Bauteile eine Anpassung des Grundkörpers bzw. Ergänzung des Grundkörpers an die jeweilige Aufgabe bzw. den vorgesehenen speziellen Verwendungszweck erfolgen.

3. Gegenüber Maschinenständern aus Zementbeton bietet der erfindungsgemäß hergestellte Maschinenständer den Vorteil, daß er so gut wie keine Feuchtigkeit aufnimmt und deshalb auch nicht von aggressiven Medien, wie Bohrölemulsion, bei der Verwendung als Maschinenständer angegriffen wird.

4. Bemerkenswert ist ferner eine gegenüber Maschinenständern aus Grauguß oder Stahlguß oder geschweißten Stahlkonstruktionen wesentlich größere, mindestens sechsfach höhere Dämpfung, so daß beispielsweise bei der Bearbeitung von Drehteilen auch bei wesentlich erhöhter Spanleistung keine Rattermarken auftreten.

5. Maschinenständer, welche ein kalthärtendes Methacrylatharz mit einer dynamischen Viskosität von weniger als 10 mPas, vorzugsweise weniger als 2 mPas, enthalten, ergeben eine hohe Biegefestigkeit bei gleichzeitiger hoher Dämpfung. Dies ist insbesondere für die Säulen wichtig, weil diese auf Zugkräfte und bei C-Ständern auf Biegung beansprucht werden.

**Patentansprüche**

1. Verfahren zur Herstellung von tragenden Maschinenbauteilen, z.B. Maschinenständern, mittels Polymerbeton auf der Basis eines aushärtbaren Kunststoffbindemittels und Zuschlagstoffen, wobei das Kunststoffbindemittel und die Zuschlagstoffe miteinander gemischt und anschließend das Gemisch in eine entsprechend vorbereitete Form eingegossen wird, in der Metallteile positioniert sind,

dadurch gekennzeichnet, daß als Kunststoff Bindemittel flüssiges, kalt härtendes Methacrylatharz mit einer dynamischen Viskosität von unter 10 mPas verwendet wird in dem ein aromatisches tertiäres Amin und bifunktionelles oder tri-funktionelles Methacrylat (z.B Ethylenglykoldimethacrylat oder Trimethylolpropantrimethacrylat) gelöst sind,

und daß den trockenen Zuschlagstoffen polymeres Methacrylatpulver und ein organisches Peroxid beigegeben sind, und daß zunächst ein Formteil (2) in einer Form gegossen, an das dann nach Aushärtung mittels einer zusätzlichen, angesetzten Form ein weiteres Formteil (3) angegossen wird.

2. Verfahren nach Anspruch 1, dadurch gekennzeichnet, daß die Form als verlorene Form am Formteil verbleibt.

3. Verfahren nach Anspruch 2, dadurch gekennzeichnet, daß die Form eine Eisenkonstruktion ist.

4. Verfahren nach Anspruch 1, 2 oder 3, dadurch gekennzeichnet, daß anstelle des aromatischen tertiären Amins ein organisches Metallsalz in dem Methylmethacrylatharz gelöst ist.

5. Verfahren nach Anspruch 1, 2, 3 oder 4, dadurch gekennzeichnet, daß die Zuschlagstoffe Aluminiumoxidtrihydrat enthalten.

6. Verfahren nach Ansprüchen 1, 2, 3, 4 oder 5, dadurch gekennzeichnet, daß die Zuschlagstoffe Fasern, vorzugsweise Metallfasern enthalten.

## Claims

1. A method of making load-carrying machine components, for example machine supports, by means of polymer concrete based on a settable plastics binding agent and additives, wherein the plastics binding agent and the additives are mixed together and then the mix is poured into a suitably prepared mould in which metal members are positioned, characterised in that the plastics binding agent used is a liquid cold-hardening methacrylate resin with a dynamic viscosity of less than 10mPas in which an aromatic tertiary amine and bi-functional or tri-functional methacrylate (for example ethylene glycol dimethacrylate or trimethylol propane trimethacrylate) are dissolved, and that polymer methacrylate powder and an organic peroxide are added to the dry additives and that firstly a cast member (2) is cast in a mould and then after setting a further cast member (3) is cast to said cast member (2) by means of an additional mould applied thereto.

2. A method according to claim 1 characterised in that the mould remains as a lost mould on the cast member.

3. A method according to claim 2 characterised in that the mould is an iron construction.

4. A method according to claim 1, claim 2 or claim 3 characterised in that instead of the aromatic tertiary amine, an organic metal salt is dissolved in the methyl methacrylate resin.

5. A method according to claim 1, claim 2, claim 3 or claim 4 characterised in that the additives contain aluminium oxide trihydrate.

6. A method according to claim 1, claim 2, claim 3, claim 4, or claim 5 characterised in that the additives contain fibres, preferably metal fibres.

## Revendications

1. Procédé de fabrication d'éléments portants de machine, par exemple de colonnes de machine, au moyen de béton à polymère à base d'un liant durcissable en substance synthétique et de granulats, le liant en substance synthétique et les granulats étant mutuellement mélangés, et le mélange étant ensuite coulé dans un moule conformément préparé, dans lequel des pièces métalliques sont disposées, caractérisé en ce que, comme liant en substance synthétique, on utilise une résine de méthacrylate durcissable à froid d'une viscosité dynamique inférieure à 10 mPas, dans laquelle une amine tertiaire aromatique et du méthacrylate difonctionnel ou trifonctionnel (par exemple du diméthacrylate d'éthylèneglycol ou du triméthacrylate de triméthylolpropane) sont dissous, et en ce qu'aux granulats secs on ajoute de la poudre de méthacrylate polymère et un peroxyde organique, et en ce que dans un moule on coule tout d'abord une pièce moulée (2) à laquelle ensuite, après durcissage, une autre pièce moulée (3) est jointe par coulage au moyen d'un moule supplémentaire appliqué.

2. Procédé suivant la revendication 1, caractérisé en ce que le moule subsiste sur la pièce moulée comme moule perdu.

3. Procédé suivant la revendication 2, caractérisé en ce que le moule est une construction métallique.

4. Procédé suivant l'une des revendications 1, 2 et 3, caractérisé en ce qu'au lieu de l'amine tertiaire aromatique on dissout un sel métallique organique dans la résine de méthacrylate de méthyle.

5. Procédé suivant l'une des revendications 1, 2, 3 et 4, caractérisé en ce que les granulats contiennent du trihydrate d'oxyde d'aluminium.

6. Procédé suivant l'une des revendications 1, 2, 3, 4 et 5, caractérisé en ce que les granulats contiennent des fibres, de préférence des fibres métalliques.

FIG. 1

FIG. 2

FIG. 3

24

23

25

22

FIG. 4

24

23

22'

FIG. 5

24

24

23

23

26

22

22

FIG. 6

24

23

26

27

22

23

FIG.7